# EUROPEAN PATENT SPECIFICATION

(11) **EP 3 125 608 B1**
(45) Date of publication and mention of the grant of the patent: **03.10.2018**
(21) Application number: 14886748.4
(22) Date of filing: 31.12.2014
(51) Int. Cl.: H04W 36/00, H04W 36/16, H04W 84/08

(54) **METHOD AND DEVICE FOR COMMUNICATION BASED ON TRUNKING SYSTEM**
VERFAHREN UND VORRICHTUNG FÜR KOMMUNIKATION AUF DER BASIS EINES TRUNKIERUNGSSYSTEMS
PROCÉDÉ ET DISPOSITIF DE COMMUNICATION SUR LA BASE D'UN SYSTÈME D'ÉTABLISSEMENT DE COMMUNICATION

(30) Priority: 26.03.2014 CN 201410117702
(43) Date of publication of application: 01.02.2017
(73) Proprietor: Hytera Communications Corporation Limited, Shenzhen, Guangdong 518057 (CN)
(72) Inventor: XU, Yan, Shenzhen Guangdong 518057 (CN); SAMUEL, Chia Han Siong, Shenzhen Guangdong 518057 (CN); ZHANG, Yingzhe, Shenzhen Guangdong 518057 (CN); YU, Yang, Shenzhen Guangdong 518057 (CN)
(74) Representative: Detken, Andreas
(86) International application number: PCT/CN2014/095924
(87) International publication number: WO 2015/143913

(56) References cited:
- EP-A1- 2 341 749
- WO-A1-2012/003618
- WO-A1-2012/053916
- CN-A- 101 689 919
- US-A1- 2010 098 049

## Description

### TECHNICAL FIELD

The present disclosure relates to the field of communication, and in particular to a communication method and device based on a trunking system.

### BACKGROUND

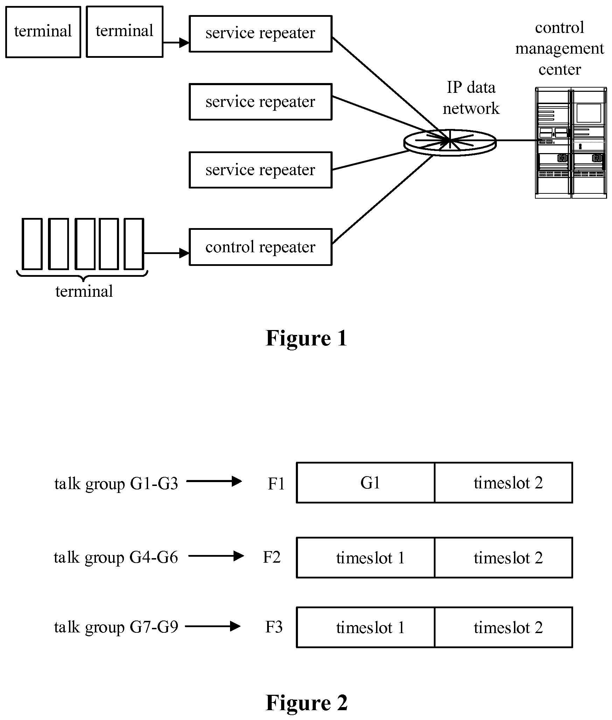

A trunking communication system, which is shown in Figure 1, includes a terminal (an interphone), a service repeater, a control repeater and a control management center. The service repeater and the control repeater include channel resources. In the trunking communication system, the control management center is configured to manage and allocate the channel resources. In a case that the terminal does not make a call or receive a call, the terminal watches at the control repeater. In a case that the terminal is to make a call, the terminal needs to send a request to the control management center via the control repeater, and after the control management center allocates a service repeater for the terminal, the terminal switches to the allocated service repeater to make a call.

Therefore, in the existing trunking communication systems, a service repeater and a control management center are indispensable in the communication process of the terminal, which increases a setup cost of the trunking communication system.

Prior art document EP2341749 discloses a procedure for the selection of an idle timeslot channel in a trunking system.

### SUMMARY

The invention is defined by the independent claims. Embodiments are defined by dependent claims. A communication method based on a trunking system is provided according to embodiments of the present disclosure, aimed at solving a problem of high setup cost of a trunking communication system caused by the fact that a service repeater and a control management center must participate in a communication process of a terminal.

To achieve the above aim, the following technical solutions are provided by the embodiments of the present disclosure.

A communication method based on a trunking system is provided, which includes:
transmitting, by a first repeater, an identifier of a free repeater and state information of the first repeater to a terminal, where the free repeater is a pre-designated one of pre-set type of repeaters, each of the preset-type of repeaters has at least one idle timeslot channel, and the state information of the first repeater indicates occupation situations of timeslot channels of the first repeater;
performing, by the terminal, communication by means of the first repeater, in a case that it is analysed by the terminal, from the state information of the first repeater, that the first repeater has an idle timeslot channel, and the first repeater is a pre-set main repeater; and
accessing, by the terminal, to the free repeater to perform communication, in a case that it is analysed by the terminal, from the state information of the first repeater, that all timeslot channels of the first repeater are occupied, and the terminal does not participate in current data communication of the first repeater.

A trunking-based communication method is provided, which includes:
receiving, by a terminal, an identifier of a free repeater and state information of a first repeater transmitted by the first repeater, where the free repeater is a pre-designated one of pre-set type of repeaters, each of the preset-type of repeaters has at least one idle timeslot channel, and the state information of the first repeater indicates occupation situations of timeslot channels of the first repeater;
performing, by the terminal, communication by means of the first repeater, in a case that it is analysed by the terminal, from the state information of the first repeater, that the first repeater has an idle timeslot channel, and the first repeater is a pre-set main repeater; and
accessing, by the terminal, to the free repeater to perform communication, in a case that it is analysed by the terminal, from the state information of the first repeater, that all timeslot channels of the first repeater are occupied, and the terminal does not participate in current data communication of the first repeater.

A repeater is provided, which includes:
a first processor configured to transmit an identifier of a free repeater and state information of a first repeater to a terminal, where the free repeater is a pre-designated one of pre-set type of repeaters, each of the preset-type of repeaters has at least one idle timeslot channel, and the state information of the repeater indicates occupation situations of timeslot channels of the first repeater; and
a first memory configured to store programs running in the first processor and data generated during running of the programs.

A terminal is provided , which includes:
a receiver configured to receive an identifier of a free repeater and state information of a first repeater transmitted by the first repeater, where the free repeater is a pre-designated one of pre-set type of repeaters, each of the preset-type of repeaters has at least one idle timeslot channel, and the state information of the first repeater indicates occupation situations of timeslot channels of the first repeater;
a second processor configured to perform communication by means of the first repeater, in a case that it is analysed by the terminal, from the state information of the first repeater, that the first repeater has an idle timeslot channel, and the first repeater is a pre-set main repeater; and accesses to the free repeater to perform communication, in a case that it is analysed by the terminal, from the state information of the first repeater, that all timeslot channels of the first repeater are occupied, and the terminal does not participate in current data communication of the first repeater; and
a second memory configured to store programs in the second processor and data generated during running of the programs.

With the method and the device according to the present disclosure, in a case that a main repeater for a terminal has an idle timeslot channel, the terminal performs communication preferably on its main repeater, and in a case that the main repeater for the terminal is busy, the terminal switches to a free repeater to perform communication. Therefore, with the method according to the present disclosure, the repeater can be configured to schedule timeslot channels for the terminal and serve for both data communication and terminal scheduling, without a control management center or a special control repeater. Thus, a setup cost of a trunking communication system is reduced.

### BRIEF DESCRIPTION OF THE DRAWINGS

To illustrate technical solutions according to embodiments of the present disclosure or in the conventional technologies more clearly, drawings to be used in the descriptions of the embodiments or the conventional technologies are described briefly hereinafter. Apparently, the drawings described hereinafter are only for some embodiments of the present disclosure, and other drawings may be obtained by those skilled in the art based on those drawings without creative efforts.
Figure 1 is a schematic structural diagram of a trunking communication system;
Figure 2 is a schematic structural diagram of a digital mobile radio communication system;
Figure 3 is a flow chart of a communication method based on a trunking communication system according to an embodiment of the present disclosure;
Figure 4 is a flow chart of a communication method based on a trunking communication system according to another embodiment of the present disclosure;
Figure 5 is a schematic structural diagram of short LC of CACH in a communication method based on a trunking communication system according to an embodiment of the present disclosure;
Figure 6 is a schematic structural diagram of Voice LC in a communication method based on a trunking communication system according to an embodiment of the present disclosure;
Figure 7 is a schematic structural diagram of PreCSBK in a communication method based on a trunking communication system according to an embodiment of the present disclosure;
Figure 8 is a schematic structural diagram of site state information in a communication method based on a trunking communication system according to an embodiment of the present disclosure;
Figure 9 is a schematic structural diagram of a repeater according to an embodiment of the present disclosure;
Figure 10 is a schematic structural diagram of a terminal according to an embodiment of the present disclosure;
Figure 11 is a schematic structural diagram of a repeater according to another embodiment of the present disclosure; and
Figure 12 is a schematic structural diagram of a terminal according to another embodiment of the present disclosure.

### DETAILED DESCRIPTION OF THE EMBODIMENTS

Embodiments of the present disclosure apply to a trunking communication system. In the embodiments of the present disclosure, digital mobile radio (DMR) is taken as an example. As shown in Figure 2, the trunking communication system includes a repeater and a terminal. The repeater has repeater frequency points. In the DMR, one repeater corresponds to two logical channel timeslots. That is, for each added repeater frequency point, two logical channel timeslots are added. For example, a repeater 1 includes three repeaters (F1, F2 and F3) and six logical channel timeslots. It should be noted that, in different time division multiple access communication systems, one repeater corresponds to different numbers of logical channel timeslots. For example, in time division multiple access four-timeslot communication, one repeater corresponds to four logical channel timeslots. Therefore, the embodiments of the present disclosure take DMR as an example, but not limited to hereto.

The method according to the embodiment of the present disclosure can support a single site trucked mode or an internet protocol (IP) interconnected multiple-site trucked mode.

Hereinafter technical solutions of the embodiments of the present disclosure are illustrated clearly and completely with drawings of the embodiments of the present disclosure. Apparently, the described embodiments are merely a few rather than all of the embodiments of the present disclosure. All other embodiments obtained by persons of ordinary skill in the art based on the embodiments of the present disclosure without creative efforts shall fall within the protection scope of the present disclosure.

A communication method based on a trunking system is provided according to an embodiment of the present disclosure, which is applied to a trunking communication system shown in Figure 2. In the trunking communication system, a repeater F1 is set as a main repeater for a terminal G1, a terminal G2 and a terminal G3 in advance, a repeater F2 is set as a main repeater for a terminal G4, a terminal G5 and a terminal G6 in advance, and a repeater F3 is set as a main repeater for a terminal G7, a terminal G8 and a terminal G8 in advance. In the embodiment, main repeaters may be allocated for terminals equally based on the number of the terminals. Alternatively, main repeaters may be allocated for terminals in another way, such as in a random designation mode. In the embodiment, the trunking communication system may be an extended trunking communication system.

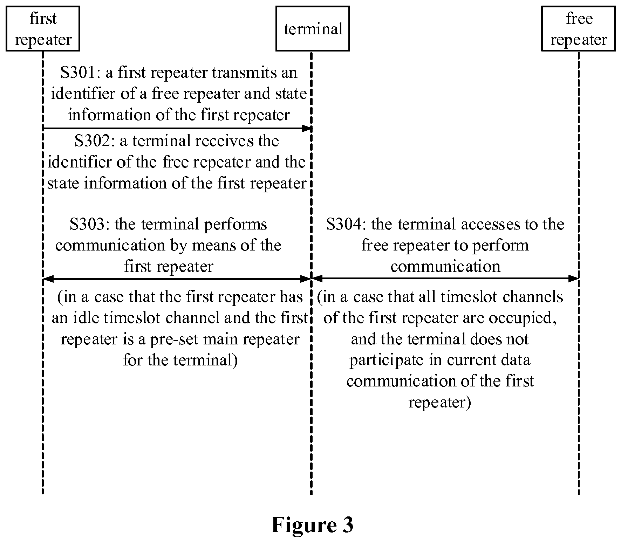

As shown in Figure 3, the method according to the embodiment of the present disclosure includes steps S301 to S304.

In step S301, a first repeater (any one of F1, F2 and F3) transmits an identifier of a free repeater and state information of the first repeater to terminals (all terminals G1 to G9).

The free repeater is a pre-designated one of pre-set type of repeaters, with each of the preset-type of repeaters having at least one idle timeslot channel. In the embodiment, a free repeater may be one of pre-set type of repeaters which is pre-designated based on a sequence number of each repeater. For example, in a case that each of F1, F2 and F3 has an idle timeslot channel, the repeater F1 is pre-designated as the free repeater.

In step S302, the terminals receive the identifier of the free repeater and the state information of the first repeater transmitted by the first repeater.

In step S303, the terminals perform communication by means of the first repeater, in a case that it is analysed by the terminal, from the state information of the first repeater, that the first repeater has an idle timeslot channel, and the first repeater is a pre-determined main repeater for the terminal.

In the embodiment, that the terminals performing communication by means of the first repeater includes the terminals performing an interception on the first repeater, initiating a call on the first repeater, or receiving a call on the first repeater.

In step S304, the terminals access to the free repeater to perform communication, in a case that it is analysed by the terminal, from the state information of the first repeater, that all timeslot channels of the first repeater are occupied, and the terminal does not participate in current data communication of the first repeater.

As shown in Figure 2, for example, G1, G2 and G3 perform an interception on F1 after being powered on. It is assumed that a timeslot channel 1 of F1 is occupied and a timeslot channel 2 of F1 is idle, and F2 is pre-designated as the free repeater. F1 transmits an identifier of F2 and state information of F1 to group members of talk groups G1, G2 and G3, and informs terminals within the coverage of F1 of occupation situations of timeslot channels of F1. Each terminal analyses the received state information of F1 and determines that F1 has an idle timeslot channel, and thus the group members of G1, G2 and G3 perform an interception or make a call on F1.

For another example, G1, G2 and G3 perform an interception on F1 after being powered on. It is assumed that all timeslot channels of F1 are occupied, and F2 is pre-designated as the free repeater. F1 transmits the identifier of F2 and the state information of F1 to group members of talk groups G1, G2 and G3, and informs terminals within the coverage of F1 of occupation situations of timeslot channels of F1. Each terminal analyses the received state information of F1 and determines that all timeslot channels on F1 are occupied, and thus terminals which are within the coverage of F1 and do not participate in a call access to F2 to perform an interception.

As can be seen from the above process, a terminal determines, based on the information broadcasted by a main repeater for the terminal, whether to initiate a call on an idle timeslot channel of the main repeater for the terminal or to switch to a free repeater to perform communication. Therefore, with the method according to the embodiment, the repeater can be configured to schedule timeslot channels for a terminal and serve for both data communication and terminal scheduling, without a control management center or a special control repeater. Thus, a setup cost of a trunking communication system is reduced.

In addition, with the method of the embodiment, when a main repeater for a terminal is busy, the terminal can access to a free repeater to perform communication. Therefore, the terminal can share channel resources, and hence, a success rate of accessing a terminal and a utilization ratio of channels are improved. Further, compared with the conventional technology, the terminal does not need to queue on a control channel to wait a release of a channel and does not need to switch from the control channel to a service channel before making a call. Hence, a time delay for setting up a call can be decreased when the terminal initiates a call.

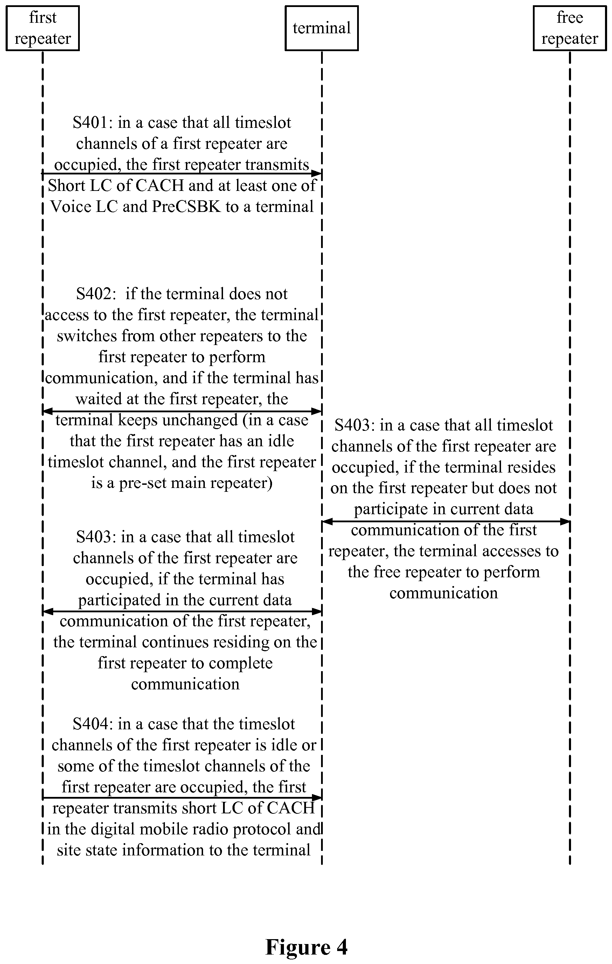

Another communication method based on a trunking system is provided according to an embodiment of the present disclosure, which is applied to a trunking communication system shown in Figure 2. As shown in Figure 4, the method according to the embodiment of the present disclosure includes steps S401 to S404.

In step S401, if all timeslot channels of a first repeater (any one of F1, F2 and F3) are occupied, the first repeater transmits, on the occupied timeslot channels, Short Link Control (Short LC) signaling of a Common Announcement Channel (CACH) and one of voice link control signaling Voice LC and pre-carrier signaling (pre control signaling block, PreCSBK) to terminals (all terminals G1 to G9).

In the embodiment, the first repeater may monitor occupation situations of timeslot channels of itself in a real-time manner, and the first repeater triggers S401 to be executed once the timeslot channels of itself are occupied.

If all timeslot channels of the repeater are occupied, it indicates that the repeater is in a non-idle operating state, the repeater may forward voice data, a short message or control signaling to the terminals. Therefore, in addition to the short LC of CACH, the repeater may also transmit one of the voice link control signaling Voice LC and the pre-carrier signaling PreCSBK to the terminals.

In the embodiment, short LC of CACH carries an identifier of the free repeater, and CACH carries the state information indicating an occupation situation of each timeslot channel of the first repeater. Generally, occupation situations of the timeslot channels may be indicated by setting a value of an access type in CACH. Voice LC and PreCSBK carry the identifier of the free repeater.

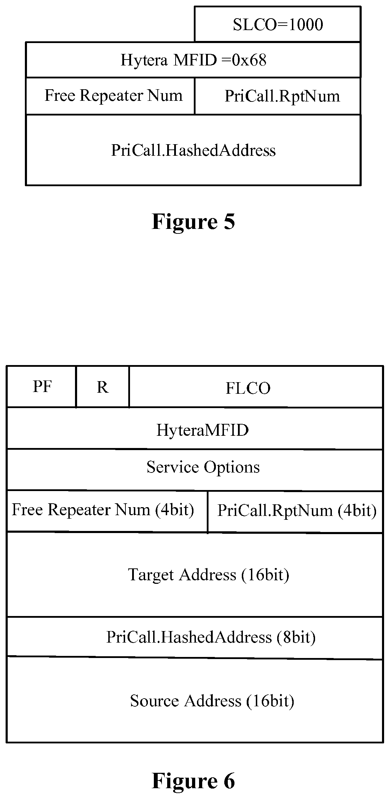

In the embodiment, the short LC of CACH is shown in Figure 5, and remarks of various parts thereof are shown in Table 1:

**Table 1**

| Information Element | Length | Value | Remark |
|---|---|---|---|
| short link operation code SLCO | 4 | 0x08 | applied to extended trunking |
| manufacturer's identification MFID | 8 | 0x68 | an characteristic identification code with a function self-defined by Hytera company |
| free repeater number Free Repeater Num | 4 | 0∼15 | 0 indicates that all channels of a repeater within a site are busy, and 1 to 15 indicate an index number of a current free repeater |
| repeater number of priority call PriCall.RptNum | 4 | 1∼15 | indicating an index number of a repeater forwarding a priority call |
| hashed address of priority call PriCall.HashedAddress | 8 | 0∼255 | indicating 8-bit hashed address of a priority call |

Voice LC is shown in Figure 6, and remarks of various parts thereof are shown in Table 2:

**Table 2**

| Information Element | Length | Value | Remark |
|---|---|---|---|
| protective flag PF | 1 | 0 | undefined, the default being 0, and reserved for future use |
| reserved bit R | 1 | 0 | reserved bit and the default being 0 |
| full link control operation code FLCO | 6 | | having different values for an individual call, a group call and a data end frame |
| manufacturer's identification MFID | 8 | 0x68 | an characteristic identification code with a function self-defined by Hytera company |
| free repeater number Free Repeater Num | 4 | 0∼15 | 0 indicates that all channels of a repeater within a site are busy, and 1 to 15 indicate an index number of a current free repeater |
| repeater number of priority call PriCall.RptNum | 4 | 1∼15 | indicating an index number of a repeater forwarding a priority call |
| target address Target Address | 16 | 1∼65535 | a target address of a call |
| hashed address of priority call PriCall.HashedAddress | 8 | 0∼255 | indicating 8-bit hashed address of a priority call |
| Source address | 16 | 1∼65535 | a source address of a call |
| Source Address | | | |

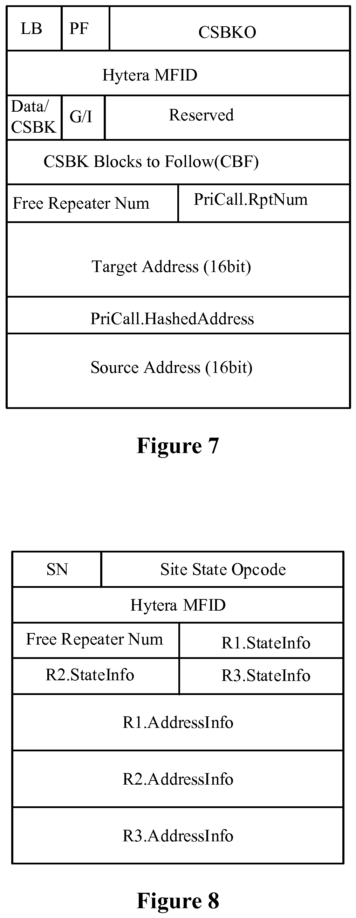

PreCSBK is shown in Figure 7, and remarks of various parts thereof are shown in Table 3:

**Table 3**

| Information Element | Length | Value | Remark |
|---|---|---|---|
| flag of last block LB | 1 | 1 | the last block of CSBK or MBC is set to be 1 |
| protective flag PF | 1 | 0 | undefined, the default being 0, and reserved for future use |
| control signaling block operation code CSBKO | 6 | 0x3d | control signaling block operation code of a pre-carrier |
| manufacturer's identification MFID | 8 | 0x68 | an characteristic identification code with a function self-defined by Hytera company |
| data or control signaling Data/CSBK | 1 | 0/1 | 0 indicates that a pre-carrier is followed by a control signaling frame, and 1 indicates that the pre-carrier is followed by data |
| group call/individual call G/I | 1 | 0/1 | 0 indicates an individual call, and 1 indicates a group call |
| reserved bit R | 6 | 0 | reserved bit and the default being 0 |
| control signaling block following CBF | 8 | | the number of control signaling blocks following the current pre-carrier |
| free repeater number Free Repeater Num | 4 | 0∼15 | 0 indicates that all channels of a repeater within a site are busy, and 1 to 15 indicate an index number of a current free repeater |
| repeater number of priority call PriCall.RptNum | 4 | 1∼15 | indicating an index number of a repeater forwarding a priority call |
| target address Target Address | 16 | 1∼65535 | a target address of a call |
| hashed address of priority call PriCall.HashedAddress | 8 | 0∼255 | indicating 8-bit hashed address of a priority call |
| source address | 16 | 1∼65535 | a source address of a call |
| Source Address | | | |

In step S402, if it is analysed by the terminal, from short LC of CACH transmitted by the first repeater, that the first repeater has an idle timeslot channel, and the first repeater is a pre-set main repeater, if there is no call to the terminal on other repeaters, the terminal connects to the first repeater to perform communication.

In step S403, if it is analysed by the terminal, from the state information of the first repeater, that all timeslot channels of the first repeater are occupied, in a case that the terminal resides on the first repeater, but does not participate in current data communication of the first repeater, the terminal accesses to the free repeater to perform communication; and in a case that the terminal has participated in current data communication of the first repeater, the terminal continues residing on the first repeater to complete communication processes.

In the embodiment, the short LC of CACH carries an identifier of the free repeater for informing the terminal of the occupation situation, and the terminal may also learn, from short LC of CACH, the occupation situation of timeslot channels of the first channel. Therefore, in a case that the first repeater is a pre-set main repeater for the terminal, and the first repeater has an idle timeslot channel, the terminal may perform communication preferably on the first repeater. In a case that all timeslot channels of the first repeater are occupied, the terminal may switch to the free repeater to perform communication and does not need to queue and wait on the first repeater.

Voice LC and PreCSBK also carry the identifier of the free repeater, so that the terminal learns the identifier of the free repeater while the repeater forwards a call, a short message and control signaling.

In step S404, in a case that the timeslot channels of the first repeater are idle or some of the timeslot channels of the first repeater are occupied, the first repeater transmits the short LC of CACH and site state information to the terminal.

The site state information includes occupation situations of various timeslot channels of each repeater and the identifier of the free repeater.

In the embodiment, the first repeater may transmit short LC of CACH and the site state information to the terminal in a pre-set frequency. Since the first repeater is idle, periodical broadcasting can avoid transmitting on a frequency point for a long time.

In the embodiment, the site state information is shown in Figure 8, and remarks of various parts thereof are shown in Table 4:

**Table 4**

| Information Element | Length | Value | Remark |
|---|---|---|---|
| sequence number SN | 2 | | 0 indicates a first frame of site state information, including timeslot channel information of repeater 1 to repeater 3 within a site; |
| | | | 1 indicates a second frame of site state information, including timeslot channel information of repeater 4 to repeater 6 within a site; |
| | | | 2 indicates a third frame of site state information, including timeslot channel information of repeater 7 to repeater 9 within a site; |
| | | | 3 is reserved for future use |
| site state operation code Site State Opcode | 6 | 0x0A | site state information operation code |
| manufacturer's identification MFID | 8 | 0x68 | an characteristic identification code with a function self-defined by Hytera company |
| free repeater number Free Repeater Num | 4 | 0∼15 | 0 indicates that all channels of a repeater within a site are busy, and 1 to 15 indicate an index number of a current free repeater |

In the embodiment, the first repeater may be any of repeaters in a trunking system. If all timeslot channels of pre-set type of repeaters except the first repeater are idle, the pre-set type of repeaters periodically transmit the short link control signaling short LC of the common announcement channel CACH in a digital mobile radio protocol and the site state information. When receiving the site state information, the terminal may analyse a current state of the main repeater for the terminal and the identifier of the free repeater. In a case that the terminal does not transceiver data, if the main repeater for the terminal has an idle timeslot channel, the terminal returns back to the main repeater for the terminal, and if the main repeater for the terminal has no idle timeslot channel, the terminal accesses to the free repeater to perform communication.

By receiving the site state information broadcasted by a system, a terminal user may know a communication situation of each repeater (including the main repeater) within a site and learn states of the current free repeater and the main repeater. Therefore, the terminal can quickly switch to a repeater frequency point which transfers a call of the terminal and access to the call, and the main repeater busily and quickly switches to the free repeater to monitor, and after the call ends, the terminal quickly returns to the main repeater for itself, which improves the performance of the call access of the extended trunking system.

It should be noted that, in the above embodiment, the free repeater may be determined complying with the following rules.

The free repeater is selected from a list of idle repeaters, and there is only one free repeater within the site at the same time. If all timeslot channels of the free repeater are occupied, the free repeater re-selects, according to per-set rules, a free repeater from the per-set type repeaters.

The free repeater may designate a new free repeater from idle repeaters according to a sequence of each repeater. For example, in Figure 2, if two timeslots of the previous free repeater F2 are occupied, F2 becomes a busy repeater. F2 designates a new free repeater F3, and according to the method described in the above embodiments, talk group members of G5 and G6 residing on F2 which do not participate in the call switch to the new free repeater F3 according to the received information.

That is, the new free repeater is always designated by the previous free repeater. If the free repeater is abnormal, and other repeaters within the site detect that the free repeater is offline, each repeater determines by itself whether it needs to become a free repeater. For example, if R3 is abnormal, R4 will become a new free repeater.

After the free repeater is changed, all repeaters within the site change the free repeater. In the above embodiment, when receiving the updated free repeater information, the first repeater or the pre-set type of repeaters update the information of free repeater embedded in the short link control signaling Short LC of the common announcement channel CACH and one of voice link control signaling Voice LC and pre-carrier signaling PreCSBK in a digital mobile radio protocol transmitted to the terminal.

In the above embodiment, following situations may be included.

First, when the terminal initiates a new call while receiving a call or hanging a call, the terminal detects whether the main repeater for the terminal has an idle channel timeslot.

In a case that the terminal detects that the main repeater for the terminal has an idle timeslot channel, the terminal stops receiving the call and switches to the main repeater for the terminal to initiate a new call. In a case that the terminal detects that the main repeater for the terminal has no idle timeslot channel, the terminal stops receiving the call and switches to the free repeater to initiate a new call.

For example, as shown in Figure 2, a writing-frequency configuration of a group member A may receive a call of a talk group G1 and G2. When receiving a call from a group call G1 on a timeslot 1 of F1, if the group member A has something urgent to do and needs to initiate a call to call G2, the group member A stops receiving the call of G1 and initiates the call to call G2 on an idle channel timeslot 2 of the main repeater F1 of the group member A.

A writing-frequency configuration of a group member B may receive a call of a talk group G2 and G3. When receiving a call from a group call G2 on a timeslot 2 of F1, if the group member B has something urgent to do and needs to initiate a call to call G3, but the main repeater of the group member B has no idle timeslot, the member group B stops receiving the call of G2, switches to a free repeater F2 and initiates the call to call G3 on an idle channel timeslot 1 of the free repeater F2.

If a repeater on which the terminal receives the call or maintains the call is neither the main repeater for the terminal nor the current free repeater, the terminal switches to the main repeater for the terminal before detecting whether the main repeater for the terminal has an idle channel timeslot, and detects whether the main repeater for the terminal has an idle channel timeslot. In a case that the terminal detects that the main repeater for the terminal has an idle timeslot, the terminal stops receiving the call and switches to the main repeater for the terminal to initiate a new call, and in a case that the terminal detects that the main repeater for the terminal has no idle timeslot, the terminal stops receiving the call and switches to the free repeater to initiate a new call.

Second, when a voice link end frame transmitted by terminal is received by the first repeater, the pre-set type of repeaters or the free repeater, the repeater broadcasts the voice link end frame within a pre-set time period if the repeater is idle, and the repeater transmits site state information when the pre-set time period is expired.

If the terminal initiates a callback while hanging a call, a timeslot channel on which the call is maintained is used to initiate the callback. If the site state information is received by the terminal, it indicates a real end of this call.

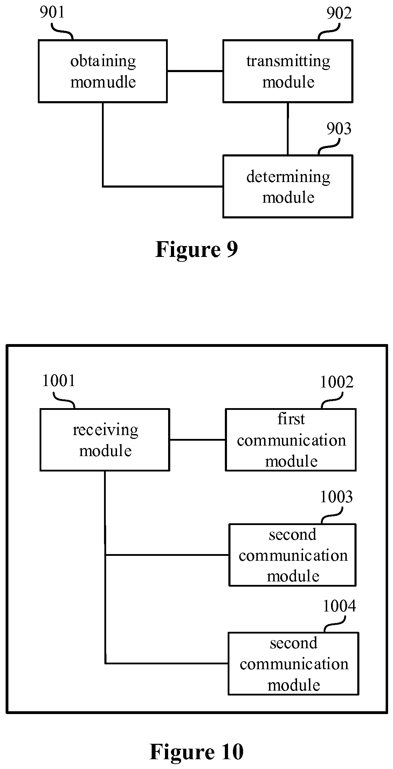

Corresponding to the above embodiments, a repeater is disclosed according to an embodiment of the disclosure. As shown in Figure 9, the repeater includes an obtaining module 901 configured to obtain an identifier of a free repeater and a transmitting module 902.

The transmitting module 902 is configured to transmit the identifier of the free repeater and state information of the repeater. The free repeater is a pre-designated one of repeaters each having at least one idle timeslot channel, and the state information of the repeater indicates occupation situations of timeslot channels of the repeater. The terminal performs communicate by means of the repeater, in a case that it is analysed by the terminal, from the state information of the repeater, that the repeater has an idle timeslot channel, and the repeater is a pre-set main repeater. The terminal accesses to the free repeater to perform communication, in a case that it is analysed by the terminal, from the state information of the repeater, that all timeslot channels of the repeater are occupied, and the terminal does not participate in current data communication of the repeater.

The transmitting, by the transmitting module, the identifier of the free repeater and the state information of the repeater to the terminal may include:
transmitting, by the transmitting module if all timeslot channels of the repeater are occupied, short link control signaling Short LC of the common announcement channel CACH and one of voice link control signaling Voice LC and pre-carrier signaling PreCSBK in a digital mobile radio protocol to the terminal.

The common announcement channel CACH in the digital mobile radio protocol carries the state information indicating an occupation situation of each timeslot channel of the repeater. The short link control signaling Short LC of the common announcement channel CACH in the digital mobile radio protocol carries the identifier of the free repeater. The voice link control signaling Voice LC or the pre-carrier signaling PreCSBK carries the identifier of the free repeater.

The transmitting module in the embodiment may be further configured to:
transmit, if the timeslot channels of the repeater are idle or some of the timeslot channels of the repeater are occupied, the short link control signaling Short LC of the common announcement channel CACH in the digital mobile radio protocol and site state information to the terminal. The site state information includes an occupation situation of each timeslot channel of each repeater within a site and the identifier of the free repeater.

The transmitting, by the transmitting module if the timeslot channels of the repeater are idle or some of the timeslot channels of the repeater are occupied, the short link control signaling Short LC of the common announcement channel CACH in the digital mobile radio protocol and the site state information to the terminal may include:
periodically transmitting, by the transmitting module, the short link control signaling Short LC of the common announcement channel CACH in the digital mobile radio protocol and the site state information, if all timeslot channels of the repeater are idle.

The repeater may further include a determining module 903, which is configured to re-determine, if all timeslot channels of the repeater are occupied, a free repeater from the pre-set type of repeaters according to a pre-set rule, and to inform other repeaters within the site to update information of the free repeater.

The transmitting module may be further configured to update, when receiving the updated information of the free repeater, the information of the free repeater embedded in the short link control signaling Short LC of the common announcement channel CACH and one of the voice link control signaling Voice LC and the pre-carrier signaling PreCSBK in the digital mobile radio protocol transmitted by the transmitting module to the terminal.

The transmitting module is further configured to: broadcast, by the repeater when receiving the voice link end frame transmitted by the terminal, a voice link end frame within a pre-set time period if the repeater is idle, and transmit the site state information by the repeater when the pre-set time period is expired.

The repeater according to the embodiment transmits the occupation situation of the timeslot channels and the identifier of the pre-set free repeater to the terminal in advance. Therefore, the repeater when being applied to a trunking communication system has a function of scheduling a terminal without setting up a control management center and a special control repeater in the trunking system, thereby saving a setup cost of a trunking communication system.

A terminal is further disclosed according to an embodiment of the present disclosure shown in Figure 10, which includes:
a receiving module 1001 configured to receive an identifier of a free repeater and state information of a first repeater transmitted by the first repeater, where the free repeater is a pre-designated one of pre-set type of repeaters, each of the preset-type of repeaters has at least one idle timeslot channel, and the state information of the first repeater indicates occupation situations of timeslot channels of the first repeater; and
a first communication module 1002 configured to perform communication by means of the first repeater, in a case that it is analysed by the terminal, from the state information of the first repeater, that the first repeater has an idle timeslot channel, and the first repeater is a pre-set main repeater; and accesses to the free repeater to perform communication, in a case that it is analysed by the terminal, from the state information of the first repeater, that all timeslot channels of the first repeater are occupied, and the terminal does not participate in current data communication of the first repeater.

The first communication module 1002 being configured to perform communication by means of the first repeater, in a case that it is analysed by the terminal, from the state information of the first repeater, that the first repeater has an idle timeslot channel, and the first repeater is the pre-set main repeater includes:
the first communication module 1002 being configured to connect to the first repeater to perform communication, in a case that it is analysed by the terminal, from the state information of the first repeater, that the first repeater has an idle timeslot channel, and the first repeater is the pre-set main repeater for the terminal, and if there is no call to the terminal on other repeaters.

Optionally, the terminal further includes:
a second communication module 1003 configured to, when receiving state information of all repeaters, analyse a current state of the main repeater and the identifier of the free repeater of the terminal, return back to the main repeater for the terminal in a case that the terminal does not perform data communication and the main repeater for the terminal has an idle timeslot channel, and access to the free repeater to perform communication in a case that the terminal does not perform data communication and the main repeater for the terminal has no idle timeslot channel; and
a third communication module 1004 configured to detect whether the main repeater for the terminal has an idle timeslot channel, when the terminal initiates a new call while receiving a call or hanging a call; stop receiving the call and switch to the main repeater for the terminal to initiate a new call, in a case that the main repeater for the terminal has an idle timeslot channel; and stop receiving the call and switch to the free repeater to initiate a new call, in a case that the main repeater for the terminal has no idle timeslot channel.

The third communication module 1004 is further configured to:
switch to the main repeater for the terminal before detecting whether the main repeater for the terminal has an idle channel timeslot, if a repeater on which the terminal receives the call or maintains the call is neither the main repeater for the terminal nor the current free repeater; and use the timeslot channel, on which the call is maintained, to call back, if the terminal initiates a callback while hanging a call.

The terminal according to the embodiment can perform communication preferably on a main repeater by receiving information from a repeater, and automatically switch to a free repeater when the main repeater is busy. Therefore, a time delay of communication in a trunking communication system can be decreased.

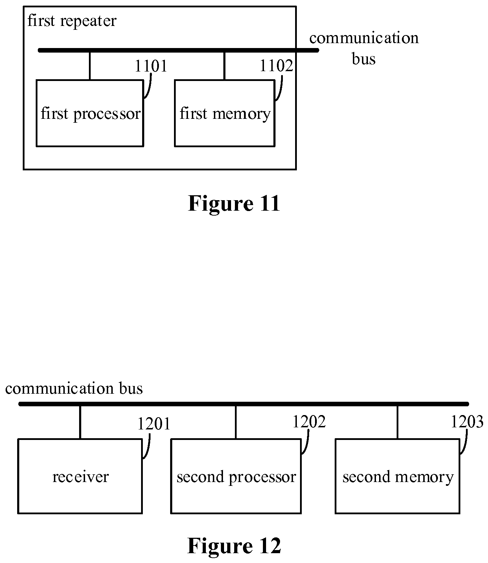

Another repeater is further disclosed according to an embodiment of the disclosure shown as Figure 11, which includes a first processor 1101 and a first memory 1102.

The first processor 1101 is configured to transmit an identifier of a free repeater and state information of the repeater to a terminal. The free repeater is a pre-designated one of pre-set type of repeaters, each of the preset-type of repeaters has at least one idle timeslot channel; the state information of the repeater indicates occupation situations of timeslot channels of the repeater. The terminal performs communication by means of the repeater, in a case that it is analysed by the terminal, from the state information of the repeater, that the repeater has an idle timeslot channel, and the repeater is a pre-set main repeater. The terminal accesses to the free repeater to perform communication, in a case that it is analysed by the terminal, from the state information of the repeater, that all timeslot channels of the repeater are occupied, and the terminal does not participate in current data communication of the repeater

The first memory 1102 is configured to store programs running in the first processor and data generating in the process of running of the programs.

Further, the transmitting, by the first processor, the identifier of the free repeater and the state information of the repeater to the terminal may include: transmitting, by the first processor, short link control signaling Short LC of the common announcement channel CACH in a digital mobile radio protocol to the terminal and one of voice link control signaling Voice LC and pre-carrier signaling PreCSBK, if all timeslot channels of the repeater are occupied.

The common announcement channel CACH in the digital mobile radio protocol carries the state information indicating an occupation situation of each timeslot channel of the repeater. The short link control signaling Short LC of the common announcement channel CACH in the digital mobile radio protocol carries the identifier of the free repeater. The voice link control signaling Voice LC or the pre-carrier signaling PreCSBK carries the identifier of the free repeater.

The first processor is further configured to transmit, in a case that timeslot channels of the repeater are idle or some of the timeslot channels of the repeater are occupied, the short link control signaling Short LC of the common announcement channel CACH in the digital mobile radio protocol and site state information to the terminal. The site state information includes an occupation situation of each timeslot channel of each repeater within a site and the identifier of the free repeater. Further, the transmitting, by the first processor in a case that the timeslot channels of the repeater are idle or some of the timeslot channels of the repeater are occupied, the short link control signaling Short LC of the common announcement channel CACH in the digital mobile radio protocol and the site state information to the terminal may include:
periodically transmitting, by the first processor, the short link control signaling Short LC of the common announcement channel CACH in the digital mobile radio protocol and the site state information, in a case that all timeslot channels of the repeater are idle.

The first processor 1101 may be further configured to re-determine a free repeater from pre-set type of repeaters according to a pre-set rule and inform other repeaters within the site to update information of the free repeater, in a case that all timeslot channels of the free repeater are occupied.

Further, in the embodiment, the first processor may be further configured to update, when receiving the updated free repeater information, the information of the free repeater embedded in the short link control signaling Short LC of the common announcement channel CACH and one of voice link control signaling Voice LC and pre-carrier signaling PreCSBK in a digital mobile radio protocol transmitted by the first processor to the terminal.

The first processor may be further configured to broadcast, by the repeater when receiving the voice link end frame transmitted by terminal, a voice link end frame within a pre-set time period if the repeater is idle. When the pre-set time period is expired, the repeater transmits site state information.

The repeater of the trunking communication system according to the embodiment has a function of terminal scheduling, and the trunking system does not need to set up a control management center and a special control repeater, thereby saving a setup cost of a trunking communication system. In addition, cooperation among a first repeater, pre-set type of repeaters and a free repeater makes the scheduling for the terminal more flexible.

A terminal is further provided according to an embodiment of the disclosure shown in Figure 12, which includes a receiver 1201, a second processor 1202 and a second memory 1203.

The receiver 1201 is configured to receive an identifier of a free repeater and state information of a first repeater transmitted by the first repeater, where the free repeater is a pre-designated one of pre-set type of repeaters, each of the preset-type of repeaters has at least one idle timeslot channel, and the state information of the first repeater indicates occupation situations of timeslot channels of the first repeater.

The second processor 1202 is configured to perform communication by means of the first repeater, in a case that it is analysed by the terminal, from the state information of the first repeater, that the first repeater has an idle timeslot channel, and the first repeater is a pre-set main repeater; and accesses to the free repeater to perform communication, in a case that it is analysed by the terminal, from the state information of the first repeater, that all timeslot channels of the first repeater are occupied, and the terminal does not participate in current data communication of the first repeater.

The second memory 1203 is configured to store programs running in the first processor and data generating in the process of running of the programs.

Specifically, the second processor 1202 being configured to perform communication by means of the first repeater, in a case that it is analysed by the terminal, from the state information of the first repeater, that the first repeater has an idle timeslot channel, and the first repeater is the pre-set main repeater for the terminal may include the four processor being configured to connect to the first repeater to perform communication, in a case that it is analysed by the terminal, from the state information of the first repeater, that the first repeater has an idle timeslot channel, and the first repeater is the pre-set main repeater, and if there is no call to the terminal on other repeaters.

The second processor 1202 may be further configured to analyse a current state of the main repeater for the terminal and the identifier of the free repeater when receiving state information of all repeaters, return back to the main repeater for the terminal in a case that the terminal does not perform data communication and the main repeater for the terminal has an idle timeslot channel, and access to the free repeater to perform communication in a case that the terminal does not perform data communication and the main repeater for the terminal has no idle timeslot channel. The second processor 1202 may be further configured to detect whether the main repeater for the terminal has an idle timeslot channel, when the terminal initiates a new call while receiving a call or hanging a call; stop receiving the call and switch to the main repeater for the terminal to initiate a new call, in a case that the main repeater for the terminal has an idle timeslot channel; and stop receiving the call and switch to the free repeater to initiate a new call, in a case that the main repeater for the terminal has no idle timeslot channel. The second processor 1202 may be further configured to switch to the main repeater for the terminal, before detecting whether the main repeater for the terminal has an idle timeslot channel, in a case that a repeater on which the terminal receives the call or maintain the call is neither the main repeater for the terminal not the current free repeater. The second processor 1202 may be further configured to use a timeslot channel, on which the call is maintained, to call back, if the terminal initiates a callback while hanging a call.

By receiving information from a repeater, the terminal according to the embodiment can perform communication preferably on a main repeater, and automatically switch to a free repeater when the main repeater is busy. Therefore, a time delay of communication in a trunking communication system can be decreased.

A trunking communication system is further disclosed according to an embodiment of the disclosure, which includes a repeater shown in Figure 9 and a terminal shown in Figure 10, or includes a repeater shown in Figure 11 and a terminal shown in Figure 12.

The functions according to the embodiment, when being implemented in a form of a soft function unit and sold or used as an independent product, can be stored in a readable storage medium of a computing device. In this respect, a part of the embodiments of the disclosure contributing to the conventional technology or a part of the technical solutions can be embodied in a form of a software product, and the software product is stored in a storage medium. The software product includes several instructions for instructing a computing device (which may be a personal computer, a server, a mobile computing device or a network device) to execute all or some of steps described in various embodiments of the disclosure. The storage medium in the forgoing includes various media capable of storing program codes, such as, a USB disk, a removable hard disk, a read-only memory (ROM), a random access memory (RAM), a magnetic disk, or an optical disk.

The embodiments of the present specification are described in a progressive manner and each embodiment places emphasis on the difference from other embodiments. Therefore, one embodiment can refer to other embodiments for the same or similar parts.

According to the description of the disclosed embodiments, the disclosure can be implemented or used by a person of skills in the art. Various modifications made to these embodiments may be obvious for persons of skills in the art, and a normal principle defined in the disclosure may be implemented in other embodiments without departing from the scope of the disclosure. Therefore the disclosure is not limited to the embodiments described herein but confirms to a widest scope in accordance with principles and novel features disclosed in the disclosure.

## Claims

1. A communication method based on a trunking system, comprising:
transmitting (S301), by a first repeater, an identifier of a free repeater and state information of the first repeater to a terminal, wherein
the free repeater is a pre-designated one of pre-set type of repeaters, each of the preset-type of repeaters has at least one idle timeslot channel, and
the state information of the first repeater indicates occupation situations of timeslot channels of the first repeater, and it is analysed by the terminal, from the state information of the first repeater, that the first repeater has an idle timeslot channel;
**characterized in that**
the identifier of the free repeater is configured to make the terminal access to the free repeater to perform communication, in a case that it is analysed by the terminal, from the state information of the first repeater, that all timeslot channels of the first repeater are occupied and that the terminal does not participate in current data communication of the first repeater.

2. The method according to claim 1, wherein the transmitting, by the first repeater, the identifier of the free repeater and the state information of the first repeater to the terminal comprises:
transmitting (S401), by the first repeater, short link control signaling Short LC of a common announcement channel CACH and one of voice link control signaling Voice LC and pre-carrier signaling PreCSBK in a digital mobile radio protocol to the terminal, in a case that all timeslot channels of the first repeater are occupied,
wherein the common announcement channel CACH in the digital mobile radio protocol carries the state information indicating an occupation situation of each timeslot channel of the first repeater, the short link control signaling Short LC of the common announcement channel CACH in the digital mobile radio protocol carries the identifier of the free repeater, and the voice link control signaling Voice LC or the pre-carrier signaling PreCSBK carries the identifier of the free repeater.

3. The method according to claim 1 or claim 2, further comprising:
transmitting, by the first repeater, short link control signaling Short LC of a common announcement channel CACH in a digital mobile radio protocol and site state information to the terminal, in a case that the timeslot channels of the first repeater are idle or some of the timeslot channels of the first repeater are occupied,
wherein the site state information comprises an occupation situation of each timeslot channel of each repeater within a site and the identifier of the free repeater.

4. The method according to claim 3, wherein in a case that the first repeater is designated as the free repeater, the method further comprises:
re-determining, by the first repeater, a new free repeater from the pre-set type of repeaters according to a pre-set rule, in a case that all timeslot channels of the first repeater are occupied; and
informing, by the first repeater, other repeaters within the site to update information of the free repeater.

5. The method according to claim 4, further comprising:
updating, by the first repeater when receiving the updated information of the free repeater, the information of the free repeater embedded in the short link control signaling Short LC of the common announcement channel CACH and one of the voice link control signaling Voice LC and the pre-carrier signaling PreCSBK in the digital mobile radio protocol transmitted by the first repeater to the terminal.

6. The method according to claim 1, further comprising:
broadcasting, by the first repeater when receiving a voice link end frame transmitted by the terminal, the voice link end frame within a pre-set time period in a case that the first repeater is idle; and transmitting the site state information by the first repeater when the pre-set time period is expired.

7. A communication method based on a trunking system, comprising:
receiving (S302), by a terminal, an identifier of a free repeater and state information of a first repeater transmitted by the first repeater, wherein the free repeater is a pre-designated one of pre-set type of repeaters, each of the preset-type of repeaters has at least one idle timeslot channel, and the state information of the first repeater indicates occupation situations of timeslot channels of the first repeater;
performing (S303), by the terminal, communication by means of the first repeater, in a case that it is analysed by the terminal, from the state information of the first repeater, that the first repeater has an idle timeslot channel, and the first repeater is a pre-set main repeater; and
accessing (S304), by the terminal, to the free repeater to perform communication, in a case that it is analysed by the terminal, from the state information of the first repeater, that all timeslot channels of the first repeater are occupied, and the terminal does not participate in current data communication of the first repeater.

8. The method according to claim 7, wherein the performing, by the terminal, communication by means of the first repeater, in a case that it is analysed by the terminal, from the state information of the first repeater, that the first repeater has an idle timeslot channel, and the first repeater is the pre-set main repeater comprises:
connecting, by the terminal, to the first repeater to perform communication, in a case that it is analysed by the terminal, from the state information of the first repeater, that the first repeater has an idle timeslot channel, the first repeater is the pre-set main repeater, and if there is no call to the terminal on other repeaters.

9. The method according to claim 7 or claim 8, further comprising:
analysing, by the terminal when receiving state information of all repeaters, a current state of the main repeater for the terminal and the identifier of the free repeater; returning, by the terminal, back to the main repeater for the terminal, in a case that the terminal does not perform data communication and the main repeater for the terminal has an idle timeslot channel; and accessing, by the terminal, to the free repeater to perform communication, in a case that the terminal does not perform data communication and the main repeater for the terminal has no idle timeslot channel.

10. The method according to claim 9, further comprising:
detecting, by the terminal, whether the main repeater for the terminal has an idle timeslot channel, when the terminal initiates a new call while receiving a call or hanging a call;
stopping, by the terminal, receiving the call, and switching, by the terminal, to the main repeater for the terminal to initiate a new call, in a case that it is detected by the terminal that the main repeater for the terminal has an idle timeslot channel; and
stopping, by the terminal, receiving the call, and switching, by the terminal, to the free repeater to initiate a new call, in a case that it is detected by the terminal that the main repeater for the terminal has no idle timeslot channel.

11. The method according to claim 10, wherein in a case that a repeater on which the terminal receives the call or maintains the call is neither the main repeater for the terminal nor the current free repeater, the method further comprises: before the terminal detects whether the main repeater for the terminal has an idle channel timeslot,
switching, by the terminal, to the main repeater for the terminal.

12. A repeater, comprising:
a first processor (1101) configured to transmit an identifier of a free repeater and state information of a repeater to a terminal, wherein the free repeater is a pre-designated one of pre-set type of repeaters, each of the preset-type of repeaters has at least one idle timeslot channel, and the state information of the repeater indicates occupation situations of timeslot channels of the repeater; and
a first memory (1102) configured to store programs running in the first processor and data generated during running of the programs;
**characterized in that**
the identifier of the free repeater is configured to make the terminal access to the free repeater to perform communication, in a case that it is analysed by the terminal, from the state information of the first repeater, that all timeslot channels of the first repeater are occupied and that the terminal does not participate in current data communication of the first repeater.

13. The repeater according to claim 12, wherein the transmitting, by the first processor, the identifier of the free repeater and the state information of the repeater to the terminal comprises:
transmitting, by the first processor, short link control signaling Short LC of a common announcement channel CACH and one of voice link control signaling Voice LC and pre-carrier signaling PreCSBK in a digital mobile radio protocol to the terminal, in a case that all timeslot channels of the repeater are occupied,
wherein the common announcement channel CACH in the digital mobile radio protocol carries the state information indicating an occupation situation of each timeslot channel of the repeater, the short link control signaling Short LC of the common announcement channel CACH in the digital mobile radio protocol carries the identifier of the free repeater, and the voice link control signaling Voice LC or the pre-carrier signaling PreCSBK carries the identifier of the free repeater.

14. The repeater according to claim 12 or claim 13, wherein the first processor is further configured to:
transmit, in a case that the timeslot channels of the repeater are idle or some of the timeslot channels of the repeater are occupied, short link control signaling Short LC of a common announcement channel CACH in a digital mobile radio protocol and site state information to the terminal,
wherein the site state information comprises an occupation situation of each timeslot channel of each repeater within a site and the identifier of the free repeater.

15. The repeater according to claim 14, wherein the first processor is further configured to:
in a case that the first repeater is designated as the free repeater, re-determine a free repeater from the pre-set type of repeaters according to a pre-set rule, in a case that all timeslot channels of the repeater are occupied; and inform other repeaters within the site to update information of the free repeater.

16. The repeater according to claim 15, wherein the first processor is further configured to:
update, when receiving the updated information of the free repeater, the information of the free repeater embedded in the short link control signaling Short LC of the common announcement channel CACH and one of the voice link control signaling Voice LC and the pre-carrier signaling PreCSBK in the digital mobile radio protocol transmitted by the first processor to the terminal.

17. The repeater according to claim 16, wherein the first processor is further configured to:
broadcast, by the repeater when receiving a voice link end frame transmitted by the terminal, the voice link end frame within a pre-set time period in a case that the repeater is idle; and transmit the site state information by the repeater when the pre-set time period is expired.

18. A terminal, comprising:
a receiver (1201) configured to receive an identifier of a free repeater and state information of a first repeater transmitted by the first repeater, wherein the free repeater is a pre-designated one of pre-set type of repeaters, each of the preset-type of repeaters has at least one idle timeslot channel, and the state information of the first repeater indicates occupation situations of timeslot channels of the first repeater;
a second processor (1202) configured to perform communication by means of the first repeater, in a case that it is analysed by the terminal, from the state information of the first repeater, that the first repeater has an idle timeslot channel, and the first repeater is a pre-set main repeater; and accesses to the free repeater to perform communication, in a case that it is analysed by the terminal, from the state information of the first repeater, that all timeslot channels of the first repeater are occupied, and the terminal does not participate in current data communication of the first repeater; and
a second memory (1203) configured to store programs in the second processor and data generated during running of the programs.

19. The terminal according to claim 18, wherein the second processor being configured to perform communication by means of the first repeater, in a case that it is analysed by the terminal, from the state information of the first repeater, that the first repeater has an idle timeslot channel, and the first repeater is the pre-set main repeater comprises:
the second processor being configured to connect to the first repeater to perform communication, in a case that it is analysed by the terminal, from the state information of the first repeater, that the first repeater has an idle timeslot channel, the first repeater is the pre-set main repeater, and if there is no call to the terminal on other repeaters.

20. The terminal according to claim 18 or claim 19, wherein the second processor is further configured to:
analysing a current state of the main repeater for the terminal and the identifier of the free repeater when receiving state information of all repeaters, return back to the main repeater for the terminal in a case that the terminal does not perform data communication and the main repeater for the terminal has an idle timeslot channel, and access to the free repeater to perform communication in a case that the terminal does not perform data communication and the main repeater for the terminal has no idle timeslot channel.

21. The terminal according to claim 20, wherein the second processor is further configured to:
detect whether the main repeater for the terminal has an idle timeslot channel, when the terminal initiates a new call while receiving a call or hanging a call; stop receiving the call and switch to the main repeater for the terminal to initiate a new call, in a case that the main repeater for the terminal has an idle timeslot channel; and stop receiving the call and switch to the free repeater to initiate a new call, in a case that the main repeater for the terminal has no idle timeslot channel.

22. The terminal according to claim 21, wherein the second processor is further configured to:
switch to the main repeater for the terminal before detecting whether the main repeater for the terminal has an idle channel timeslot, in a case that a repeater on which the terminal receives the call or maintains the call is neither the main repeater for the terminal nor the current free repeater.

23. The terminal according to claim 20 or claim 21, wherein the second processor is further configured to:
use the timeslot channel, on which the call is maintained, to call back, in a case that the terminal initiates a callback while hanging a call.

24. A trunking communication system, comprising the repeater according to any one of claims 12 to 17 and the terminal according to any one of claims 18 to 23.

## Patentansprüche

1. Ein Kommunikationsverfahren basierend auf einem Trunkierungssystem, umfassend:
Übertragen (S301), durch einen ersten Repeater, eines Identifikators eines freien Repeaters und Zustandsinformation des ersten Repeaters an ein Terminal, wobei
der freie Repeater ein vorbestimmter Typ von vorgegebenen Typen von Repeatern ist, wobei jeder der vorgegebenen Repeatern mindestens einen freien Zeitschlitzkanal hat, und
wobei die Zustandsinformation des ersten Repeaters Belegungssituationen der Zeitschlitzkanäle des ersten Repeaters angibt, und es wird durch das Terminal analysiert, von der Zustandsinformation des ersten Repeaters, dass der erste Repeater einen freien Zeitschlitzkanal hat,
**dadurch gekennzeichnet, dass** der Identifikator des freien Repeaters dazu konfiguriert ist, das Terminal auf den freien Repeater zugreifen zu lassen um Kommunikation durchzuführen, für den Fall dass es vom Terminal analysiert wird, von der Zustandsinformation des ersten Repeaters, dass alle Zeitschlitzkanäle des ersten Repeaters belegt sind und dass das Terminal in keiner gegenwärtigen Datenkommunikation des ersten Repeaters beteiligt ist.

2. Verfahren nach Anspruch 1, wobei das Übertragen, durch den ersten Repeater, des Identifikators des freien Repeaters und der Zustandsinformation des ersten Repeaters an das Terminal umfasst:
Übertragen (S401), durch den ersten Repeater, von Kurzlink-Steuersignalisierung Short LC eines allgemeinen Ansagekanals CACH und eines von Sprachlink-Steuersignalisierung Voice LC und Pre-Carrier Signalisierung PreCSBK in einem digitalen mobilen Funkprotokoll an das Terminal, für den Fall dass alle Zeitschlitzkanäle des ersten Repeaters belegt sind,
wobei der allgemeine Ansagekanal CACH in dem digitalen mobilen Funkprotokoll die Zustandsinformation trägt, welche eine Belegungssituation von jedem Zeitschlitzkanal des ersten Repeaters angibt, wobei die Kurzlink-Steuersignalisierung Short LC des allgemeinen Ansagekanals CACH im digitalen mobilen Funkprotokoll den Identifikator des freien Repeaters trägt, und wobei die Sprachlink-Steuersignalisierung Voice LC oder die Pre-Carrier Signalisierung PreCSBK den Identifikator des freien Repeaters trägt.

3. Verfahren gemäss Anspruch 1 oder 2, weiter umfassend:
Übertragen, durch den ersten Repeater, von Kurzlink-Steuersignalisierung Short LC eines allgemeinen Ansagekanals CACH in einem digitalen mobilen Funkprotokoll und Standort-Zustandsinformation an das Terminal, für den Fall dass die Zeitschlitzkanäle des ersten Repeaters frei sind oder einige der Zeitschlitzkanäle des ersten Repeaters besetzt sind,
wobei die Standort-Zustandsinformation eine Belegsituation von jedem Zeitschlitzkanal von jedem Repeater innerhalb eines Standorts und den Identifikator des freien Repeaters umfasst.

4. Verfahren gemäss Anspruch 3, wobei für den Fall dass der erste Repeater als den freien Repeater bestimmt ist, dass Verfahren weiter umfass:
Wieder-Bestimmen, durch den ersten Repeater, eines neuen freien Repeaters aus den vorgegebenen Typen von Repeatern gemäss einer Vorgaberegel, für den Fall dass alle Zeitschlitzkanäle des ersten Repeaters belegt sind; und
Informieren, durch den ersten Repeater, der anderen Repeater innerhalb des Standorts um Information des freien Repeaters zu aktualisieren.

5. Verfahren gemäss Anspruch 4, weiter umfassend:
Aktualisieren, durch den ersten Repeater bei Erhalt der aktualisierten Information des freien Repeaters, der Information des freien Repeaters, welcher in der Kurzlink-Steuerungssignalisierung Short LC des allgemeinen Ansagekanals CACH und eines der Sprachlink-Steuersignalisierung Voice LC und der Pre-Carrier Signalisierung PreCSBK im digitalen mobilen Funkprotokoll, welche durch den ersten Repeater an das Terminal übertagen werden, eingebettet ist.

6. Verfahren gemäss Anspruch 1, weiter umfassend:
Senden, durch den ersten Repeater bei Erhalt eines Sprachlink-Endbildes, welches durch das Terminal übertragen wird, des Sprachlink-Endbilds innerhalb einer vorbestimmten Zeitspanne für den Fall dass der erste Repeater frei ist; und Übertragen der Standort-Zustandsinformation durch den ersten Repeater wenn die vorbestimmte Zeitspanne abgelaufen ist.

7. Ein Kommunikationsverfahren basierend auf einem Trunkierungssystem, umfassend:
Erhalten (S302), von einem Terminal, eines Identifikators eines freien Repeaters und Zustandsinformation eines ersten Repeaters, welche vom ersten Repeater übertragen wird, wobei der freie Repeater ein vorbestimmter Typ von vorgegebenen Typen von Repeatern ist, wobei jeder der vorgegebenen Repeatern mindestens einen freien Zeitschlitzkanal hat, und wobei die Zustandsinformation des ersten Repeaters Belegungssituationen der Zeitschlitzkanäle des ersten Repeaters angibt;
Durchführen (S303), durch das Terminal, von Kommunikation mittels des ersten Repeaters für den Fall dass das Terminal analysiert, von der Zustandsinformation des ersten Repeaters, dass der erste Repeater einen freien Zeitschlitzkanal hat, und der erste Repeater ein vorgegebener Haupt-Repeater ist; und
Zugreifen (S304), durch das Terminal, auf den freien Repeater um Kommunikation durchzuführen, für den Fall dass es vom Terminal analysiert wird, von der Zustandsinformation des ersten Repeaters, dass alle Zeitschlitzkanäle des ersten Repeaters belegt sind und dass das Terminal in keiner gegenwärtigen Datenkommunikation des ersten Repeaters beteiligt ist.

8. Verfahren gemäss Anspruch 7, wobei das Durchführen, durch das Terminal, von Kommunikation mittels des ersten Repeaters, für den Fall dass das Terminal analysiert, von der Zustandsinformation des ersten Repeaters, dass der erste Repeater einen freien Zeitschlitzkanal hat, und der erste Repeater der vorgegebene Haupt-Repeater ist, umfasst:
Verbinden, durch das Terminal, mit dem ersten Repeater um Kommunikation durchzuführen, für den Fall dass das Terminal analysiert, von der Zustandsinformation des ersten Repeaters, dass der erste Repeater einen freien Zeitschlitzkanal hat, und der erste Repeater der vorgegebene Haupt-Repeater ist, und es keinen Anruf auf das Terminal auf anderen Repeater gibt.

9. Verfahren gemäss Anspruch 7 oder Anspruch 8, weiter umfassend:
Analysieren, durch das Terminal bei Erhalt der Zustandsinformation von allen Repeatern, eines gegenwärtigen Zustands des Haupt-Repeaters für das Terminal und des Identifikators des freien Repeaters; Zurückgeben, durch das Terminal, an den Haupt-Repeater für das Terminal für den Fall dass das Terminal keine Datenkommunikation ausführt und der Haupt-Repeater für das Terminal einen freien Zeitschlitzkanal hat; und Zugreifen, durch das Terminal, auf den freien Repeater um Kommunikation durchzuführen, für den Fall dass das Terminal keine Datenkommunikation ausführt und der Haupt-Repeater für das Terminal keinen freien Zeitschlitzkanal hat.

10. Verfahren gemäss Anspruch 9, weiter umfassend:
Erkennen, durch das Terminal, ob der Haupt-Repeater für das Terminal einen freien Zeitschlitzkanal hat, wenn das Terminal einen neuen Anruf initiiert während ein Anruf erhalten wird oder ein Anruf gehalten wird;
Einstellen, durch das Terminal, des Erhaltens des Anrufs, und Umschalten, durch das Terminal, auf den Haupt-Repeater um einen neuen Anruf zu initiieren, für den Fall dass das Terminal erkennt, dass der Haupt-Repeater für das Terminal einen freien Zeitschlitzkanal hat; und
Einstellen, durch das Terminal, des Erhaltens des Anrufs, und Umschalten, durch das Terminal, auf den freien Repeater um einen neuen Anruf zu initiieren, für den Fall dass es durch das Terminal erkannt wird, das der Haupt-Repeater für das Terminal keinen freien Zeitschlitzkanal hat.

11. Verfahren gemäss Anspruch 10, wobei für den Fall dass ein Repeater auf welchem das Terminal den Anruf erhält oder aufrechterhält weder der Haupt-Repeater für das Terminal noch der gegenwärtig freie Repeater ist, das Verfahren weiter umfasst: bevor das Terminal erkennt, ob der Haupt-Repeater für das Terminal einen freien Zeitschlitzkanal hat,
Umschalten, durch das Terminal, auf den Haupt-Repeater für das Terminal.

12. Ein Repeater, umfassend:
einen ersten Prozessor (1101), welcher dazu konfiguriert ist, einen Identifikator eines freien Repeaters und Zustandsinformation eines Repeaters an ein Terminal zu übertragen, wobei der freie Repeater ein vorbestimmter Typ von vorgegebenen Typen von Repeatern ist, wobei jeder der vorgegebenen Repeatern mindestens einen freien Zeitschlitzkanal hat, und wobei die Zustandsinformation des Repeaters Belegungssituationen der Zeitschlitzkanäle des Repeaters angibt; und
einen ersten Speicher (1102), welcher dazu konfiguriert ist, Programme, welche im ersten Prozessor laufen, und während dem Laufen der Programme erzeuge Daten zu speichern;
**dadurch gekennzeichnet, dass** der Identifikator des freien Repeaters dazu konfiguriert ist, das Terminal auf den freien Repeater zugreifen zu lassen, um Kommunikation durchzuführen, für den Fall, dass es durch das Terminal analysiert wird, von der Zustandsinformation des ersten Repeaters, dass alle Zeitschlitzkanäle des ersten Repeaters belegt sind und dass das Terminal nicht an der gegenwärtigen Datenkommunikation des ersten Repeaters teilnimmt.

13. Repeater gemäss Anspruch 12, wobei das Übertagen, durch den ersten Prozessor, des Identifikators des freien Repeaters und der Zustandsinformation des Repeaters an das Terminal umfasst:
Übertragen, durch den ersten Prozessor, von Kurzlink-Steuersignalisierung Short LC eines allgemeinen Ansagekanals CACH und eines von Sprachlink-Steuersignalisierung Voice LC und Pre-Carrier Signalisierung PreCSBK in einem digitalen mobilen Funkprotokoll an das Terminal, für den Fall dass alle Zeitschlitzkanäle des Repeaters belegt sind,
wobei der allgemeinen Ansagekanals CACH im digitalen mobilen Funkprotokoll die Zustandsinformation trägt, welche eine Belegsituation von jedem Zeitschlitzkanal des Repeaters angibt, wobei die Sprachlink-Steuersignalisierung Voice LC des allgemeinen Ansagekanals CACH im digitalen mobilen Funkprotokoll den Identifikator des freien Repeaters trägt, und wobei die Sprachlink-Steuersignalisierung Voice LC oder die Pre-Carrier Signalisierung PreCSBK den Identifikator des freien Repeaters trägt.

14. Repeater gemäss Anspruch 12 oder Anspruch 13, wobei der erste Prozessor weiter konfiguriert ist, um:
Übertragen, für den Fall dass die Zeitschlitzkanäle des Repeaters frei sind oder einige der Zeitschlitzkanäle des Repeaters besetzt sind, von Kurzlink-Steuersignalisierung Short LC eines allgemeinen Ansagekanals CACH in einem digitalen mobilen Funkprotokoll und Standort-Zustandsinformation an das Terminal, wobei die Standort-Zustandsinformation eine Belegsituation von jedem Zeitschlitzkanal von jedem Repeater innerhalb eines Standorts und den Identifikator des freien Repeaters umfasst.

15. Repeater gemäss Anspruch 14, wobei der erste Prozessor weiter konfiguriert ist, um:
Für den Fall, dass der erste Repeater als freier Repeater bestimmt ist, Wieder-Bestimmen eines freien Repeaters aus den vorgegebenen Typen von Repeatern gemäss einer Vorgaberegel, für den Fall dass alle Zeitschlitzkanäle des ersten Repeaters belegt sind; und Informieren der anderen Repeatern innerhalb des Standorts um Information des freien Repeaters zu aktualisieren.

16. Repeater gemäss Anspruch 15, wobei der erste Prozessor weiter konfiguriert ist, um:
Aktualisieren, bei Erhalt der aktualisierten Information des freien Repeaters, der Information des freien Repeaters, welcher in der Kurzlink-Steuerungssignalisierung Short LC des allgemeinen Ansagekanals CACH und einem der Sprachlink-Steuersignalisierung Voice LC und der Pre-Carrier Signalisierung PreCSBK im digitalen mobilen Funkprotokoll, welche durch den ersten Repeater an das Terminal übertagen werden, eingebettet ist.

17. Repeater gemäss Anspruch 16, wobei der erste Prozessor weiter konfiguriert ist, um:
Senden, durch den ersten Repeater bei Erhalt eines Sprachlink-Endbildes, welches durch das Terminal übertragen wird, des Sprachlink-Endbilds innerhalb einer vorbestimmten Zeitspanne für den Fall dass der Repeater frei ist; und Übertragen der Standort-Zustandsinformation durch den Repeater wenn die vorbestimmte Zeitspanne abgelaufen ist.

18. Terminal, umfassend:
einen Empfänger (1201), welcher konfiguriert ist, einen Identifikator eines freien Repeaters und Zustandsinformation eines ersten Repeaters, welche durch den ersten Repeater übertragen wird, zu erhalten, wobei der freie Repeater ein vorbestimmter Typ von vorgegebenen Typen von Repeatern ist, wobei jeder der vorgegebenen Repeatern mindestens einen freien Zeitschlitzkanal hat, und wobei die Zustandsinformation des ersten Repeaters Belegungssituationen der Zeitschlitzkanäle des ersten Repeaters angibt;
einen zweiten Prozessor (1202), welcher konfiguriert ist, Kommunikation mittels des ersten Repeaters durchzuführen, für den Fall, dass es durch das Terminal analysiert wird, von der Zustandsinformation des ersten Repeaters, dass der erste Repeater einen freien Zeitschlitzkanal hat, und der erste Repeater ein vorgegebener Haupt-Repeater ist; und auf den freien Repeater zuzugreifen, um Kommunikation durchzuführen, für den Fall dass es durch das Terminal analysiert wird, von der Zustandsinformation des ersten Repeaters, dass alle Zeitschlitzkanäle des ersten Repeaters belegt sind, und das Terminal nicht an der gegenwärtigen Datenkommunikation des ersten Repeaters teilnimmt; und
einen zweiten Speicher (1203), welcher konfiguriert ist, Programme im zweiten Prozessor und Daten, welche während dem Laufen der Programme erzeugt werden, zu speichern.

19. Terminal gemäss Anspruch 18, wobei der zweite Prozessor, welcher konfiguriert ist, um Kommunikation mittels des ersten Repeaters durchzuführen, für den Fall, dass es durch das Terminal analysiert wird, von den Zustandsinformation des ersten Repeaters, dass der erste Repeater einen freien Zeitschlitzkanal hat, und der erste Repeater der vorgegebene Haupt-Repeater ist, umfasst:
der zweite Prozessor ist dazu konfiguriert, sich mit dem ersten Repeater zu verbinden um Kommunikation durchzuführen, für den Fall, dass es durch das Terminal analysiert wird, von den Zustandsinformationen des ersten Repeaters, dass der erste Repeater einen freien Zeitschlitzkanal hat, und der erste Repeater der vorgegebene Haupt-Repeater ist, und falls es keinen Anruf auf das Terminal auf anderen Repeatern gibt.

20. Terminal gemäss Anspruch 18 oder Anspruch 19, wobei der zweite Prozessor konfiguriert ist, um:
Analysieren eines gegenwärtigen Zustands des Haupt-Repeaters für das Terminal und den Identifikator des freien Repeaters bei Erhalt der Zustandsinformation von allen Repeatern, Zurückgeben an den Haupt-Repeater für das Terminal für den Fall dass das Terminal keine Datenkommunikation ausführt und der Haupt-Repeater für das Terminal einen freien Zeitschlitzkanal hat, und Zugreifen auf den freien Repeater um Kommunikation durchzuführen, für den Fall dass das Terminal keine Datenkommunikation ausführt und der Haupt-Repeater für das Terminal keinen freien Zeitschlitzkanal hat.

21. Terminal gemäss Anspruch 20, wobei der zweite Prozessor weiter konfiguriert ist, um:
Erkennen, ob der Haupt-Repeater für das Terminal einen freien Zeitschlitzkanal hat, wenn das Terminal einen neuen Anruf initiiert während ein Anruf erhalten wird oder ein Anruf gehalten wird;
Einstellen des Erhaltens des Anrufs und Umschalten auf den Haupt-Repeater für das Terminal um einen neuen Anruf zu initiieren, für den Fall, dass der Haupt-Repeater für das Terminal einen freien Zeitschlitzkanal hat; und
Einstellen des Erhaltens des Anrufs und Umschalten auf den freien Repeater um einen neuen Anruf zu initiieren, für den Fall dass der Haupt-Repeater für das Terminal keinen freien Zeitschlitzkanal hat.

22. Terminal gemäss Anspruch 21, wobei der zweite Prozessor weiter konfiguriert ist, um:
Umzuschalten auf den Haupt-Repeater für das Terminal bevor erkannt wird, ob der Haupt-Repeater für das Terminal einen freien Zeitkanalschlitz hat, für den Fall dass ein Repeater auf welchem das Terminal den Anruf erhält oder den Anruf aufrechterhält weder der Haupt-Repeater für das Terminal noch der gegenwärtige freie Repeater ist.

23. Terminal gemäss Anspruch 20 oder Anspruch 21, wobei der zweite Prozessor konfiguriert ist, um:
Verwenden des Zeitschlitzkanals, auf welchem der Anruf gehalten wird, um Zurückzurufen, für den Fall dass das Terminal einen Rückruf initiiert während ein Anruf anhängig ist.

24. Trunkierungssystem umfassend den Repeater gemäss einem der Ansprüche 12 bis 17 und das Terminal gemäss einem der Ansprüche 18 bis 23.

## Revendications

1. Un procédé de communication sur la base d'un système d'établissement de communication, comprenant :
transmettre (S301), au moyen d'un premier répéteur, un identifiant d'un répéteur libre et des informations d'état du premier répéteur à un terminal, où
le répéteur libre est un répéteur désigné à l'avance parmi des répéteurs d'un type préréglé, chacun des répéteurs d'un type préréglé ayant au moins un canal de créneau temporel au repos, et
les informations d'état du premier répéteur indiquent des situations d'occupation de créneaux temporels du premier répéteur, et il est analysé par le terminal, à partir des informations d'état du premier répéteur, que le premier répéteur a un canal de créneau temporel au repos,
**caractérisé en ce que**
l'identifiant du répéteur libre est configuré pour pousser le terminal à accéder au répéteur libre pour effectuer une communication, dans le cas où il est analysé par le terminal, à partir des informations d'état du premier répéteur, que tous les canaux de créneau temporel du premier répéteur sont occupés et que le terminal ne participe pas dans la communication de données actuelle du premier répéteur.

2. Le procédé selon la revendication 1, dans lequel la transmission, par le premier répéteur, de l'identifiant du répéteur libre et des informations d'état du premier répéteur au terminal comprend :
transmettre (S401), au moyen du premier répéteur, une signalisation de contrôle de liaison courte Short LC d'un canal à annonce commune CACH et une parmi une signalisation de contrôle de liaison vocale Voice LC et une signalisation pré-porteuse PreCSBK dans un protocole à radio mobile numérique au terminal, dans le cas où tous les canaux de créneaux temporels du premier répéteur sont occupés,
où le canal à annonce commune CACH dans le protocole de radio mobile numérique comporte les informations d'état indiquant une situation d'occupation pour chaque canal de créneau temporel du premier répéteur, la signalisation de contrôle de liaison courte Short LC du canal à annonce commune CACH dans le protocole de radio mobile numérique comporte l'identifiant du répéteur libre, et la signalisation de contrôle de liaison vocale Voice LC ou la signalisation pré-porteuse PreCSBK comporte l'identifiant du répéteur libre.

3. Le procédé selon la revendication 1 ou 2, comprenant d'avantage
transmettre, au moyen du premier répéteur, une signalisation de contrôle de liaison courte Short LC d'un canal à annonce commune CACH dans un protocole de radio mobile numérique et des informations d'état d'emplacement au terminal, dans le cas où les canaux de créneau temporel du premier répéteur sont au repos ou quelques-uns des canaux de créneau temporel du premier répéteur sont occupés,
où les informations d'état d'emplacement comprennent une situation d'occupation de chaque canal de créneau temporel de chaque répéteur dans un emplacement et l'identifiant du répéteur libre.

4. Le procédé selon la revendication 3, où dans le cas où le premier répéteur est désigné en tant que répéteur libre, le procédé comprend d'avantage :
re-déterminer, au moyen du premier répéteur, un répéteur nouveau libre parmi les répéteurs d'un type préréglé selon une règle prédéterminé, dans le cas où tous les canaux de créneau temporel du premier répéteur sont occupés ; et
informer, au moyen du premier répéteur, les autres répéteurs dans l'emplacement afin de mettre à jour les informations du répéteur libre.

5. Le procédé selon la revendication 4, comprenant d'avantage :
mettre à jour, au moyen du premier répéteur, pendant la réception des informations mises à jour du répéteur libre, les informations du répéteur libre incorporées dans la signalisation de contrôle de liaison courte Short LC du canal à annonce commune CACH et une parmi la signalisation de contrôle de liaison vocale Voice LC et la signalisation pré-porteuse PreCSBK dans le protocole radio mobile numérique transmis le premier répéteur au terminal.

6. Le procédé selon la revendication 1, comprenant d'avantage :
diffuser, au moyen du premier répéteur, pendant la réception d'une trame terminal de liaison vocale transmise par le terminal, la trame terminal de liaison vocale dans une période de temps prédéterminée dans le cas où le premier répéteur est au repos, et transmettre les informations d'état d'emplacement au moyen du premier répéteur lorsque la période de temps prédéterminée a expirée.

7. Un procédé de communication sur la base d'un système d'établissement de communication, comprenant :
recevoir (S302), au moyen d'un terminal, un identifiant d'un répéteur libre et des informations d'état d'un premier répéteur transmises par le premier répéteur, où le répéteur libre et un répéteur désigné à l'avance parmi des répéteurs d'un type préréglé, chacun des répéteurs d'un type préréglé ayant au moins un canal de créneau temporel au repos, et les informations d'état du premier répéteur indiquent des situations d'occupation des canaux de créneau temporel du premier répéteur ;
effectuer (S303), au moyen du terminal, une communication au moyen du premier répéteur, dans le cas où il est analysé par le terminal, à partir des informations d'état du premier répéteur, que le premier répéteur a un canal de créneau temporel au repos, et le premier répéteur est un répéteur préréglé principal ; et
accéder (S304), au moyen du terminal, au répéteur libre pour effectuer une communication, dans le cas où il est analysé par le terminal, à partir des informations d'état du premier répéteur, que tous les canaux de créneau temporel du premier répéteur sont occupés, et le terminal ne participe pas à la communication de données actuelle du premier répéteur.

8. Le procédé selon la revendication 7, où effectuer, au moyen du terminal, une communication au moyen du premier répéteur, dans le cas où il est analysé par le terminal, à partir des informations d'état du premier répéteur, que le premier répéteur a un canal de créneau temporel au repos, et le premier répéteur est un répéteur préréglé principal, comprend :
connecter, au moyen du terminal, au premier répéteur pour effectuer une communication, dans le cas où il est analysé par le terminal, à partir des informations d'état du premier répéteur, que le premier répéteur a un canal de créneau temporel au repos, le premier répéteur est un répéteur préréglé principal, et s'il n'existe pas d'appel vers le terminal sur d'autres répéteurs.

9. Le procédé selon la revendication 7 ou 8, comprenant d'avantage :
analyser, au moyen du terminal, pendant la réception des informations d'état de tous les répéteurs, un état actuel du répéteur principal pour le terminal et l'identifiant du répéteur libre ; retourner, au moyen du terminal, vers le répéteur principal pour le terminal, dans le cas où le terminal n'effectue pas de communication de données et le répéteur principal pour le terminal a un canal de créneau temporel au repos ; et accéder, au moyen du terminal, au répéteur libre pour effectuer une communication, dans le cas où le terminal n'effectue pas de communication de données et le répéteur principal pour le terminal n'a aucun canal de créneau temporel au repos.

10. Le procédé selon la revendication 9, comprenant d'avantage :
détecter, au moyen du terminal, si le répéteur principal pour le terminal a un canal de créneau temporel au repos, lorsque le terminal initie un appel nouveau pendant la réception d'un appel ou la suspension d'un appel ;
arrêter, au moyen du terminal, la réception de l'appel, et commuter, au moyen du terminal, vers le répéteur principal pour le terminal afin d'initier un appel nouveau, dans le cas où il est détecté par le terminal que le répéteur principal pour le terminal a un canal de créneau temporel au repos ; et
arrêter, au moyen du terminal, la réception de l'appel, et commuter, au moyen du terminal, vers le répéteur libre afin d'initier un appel nouveau, dans le cas où il est détecté par le terminal que le répéteur principal pour le terminal n'a pas de canal de créneau temporel au repos.

11. Le procédé selon la revendication 10, où dans le cas où un répéteur sur lequel le terminal reçoit l'appel ou maintient l'appel n'est ni le répéteur principal pour le terminal ni le répéteur libre actuel, le procédé comprenant d'avantage: avant que le terminal ne détecte si le répéteur principal pour le terminal a un canal de créneau temporel au repos,
commuter, au moyen du terminal, vers le répéteur principal pour le terminal.

12. Un répéteur, comprenant:
un premier processeur (1101), configuré pour transmettre un identifiant d'un répéteur libre et des informations d'état d'un répéteur à un terminal, où le répéteur libre est un répéteur désigné à l'avance parmi des répéteur d'un type préréglé, chacun des répéteurs d'un type préréglé ayant au moins un canal de créneau temporel au repos, et les informations d'état du répéteur indiquent des situations d'occupation de canaux de créneau temporel du répéteur; et
une première mémoire (1102) configurée pour stocker des logiciels tournant sur le premier processeur et les données générées pendant que les programmes tournent;
**caractérisé en ce que**
l'identifiant du répéteur libre est configuré pour pousser le terminal à accéder au répéteur libre pour effectuer une communication, dans le cas où il est analysé par le terminal, à partir des informations d'état du premier répéteur, que tous les canaux de créneau temporel du premier répéteur sont occupés et que le terminal ne participe pas à une communication de données actuelle du premier répéteur.

13. Le répéteur selon la revendication 12, où la transmission, au moyen du premier processeur, de l'identifiant du répéteur libre et de l'information d'état du répéteur au terminal comprend:
transmettre, au moyen du premier processeur, une signalisation de contrôle de liaison court Short LC d'un canal à annonce commune CACH et une parmi une signalisation de contrôle de liaison vocale Voice LC et une signalisation pré-porteuse PreCSBK dans un protocole radio mobile numérique au terminal dans le cas où tous les canaux de créneau temporel du répéteur sont occupés,
où le canal à annonce commune CACH dans le protocole de radio mobile numérique comporte les informations d'état indiquant une situation d'occupation de chaque canal de créneau temporel du répéteur, la signalisation contrôle de liaison courte Short LC du canal à annonce commune CACH dans le protocole radio mobile numérique comporte l'identifiant du répéteur libre, et la signalisation de contrôle de liaison vocale Voice LC où la signalisation pré-porteuse PreCSBK comporte l'identifiant du répéteur libre.

14. Le répéteur selon la revendication 12 ou 13, dans lequel le premier processeur est configuré d'avantage pour:
transmettre, dans le cas où les canaux de créneau temporel du répéteur sont au repos ou quelques-uns des canaux de créneau temporel du répéteur sont occupés, une signalisation de contrôle de liaison courte Short LC d'un canal à annonce commune CACH dans un protocole de radio mobile numérique et des informations d'état d'emplacement au terminal,
où les informations d'état d'emplacement comprennent une situation d'occupation de chaque canal de créneau temporel de chaque répéteur dans un emplacement et l'identifient du répéteur libre.

15. Le répéteur selon la revendication 14, dans lequel le premier processeur est configuré d'avantage pour:
dans le cas où le premier répéteur est désigné en tant que répéteur libre, re-déterminer un répéteur libre à partir des répéteurs d'un type préréglé selon une règle prédéterminée, dans le cas où tous les canaux de créneau temporel du répéteur sont occupés; et informer les autres répéteurs dans l'emplacement afin de mettre à jour les informations du répéteur libre.

16. Le répéteur selon la revendication 15, dans lequel le premier processeur est configuré d'avantage pour:
mettre à jour, pendant la réception des informations mises à jour du répéteur libre, les informations du répéteur intégrées dans la signalisation de contrôle de liaison courte Short LC du canal à annonce commune CACH et une parmi la signalisation de contrôle de liaison vocale Voice LC et la signalisation pré-porteuse PreCSBK dans le protocole de radio mobile numérique transmis par le premier processeur au terminal.

17. Le répéteur selon la revendication 16, dans lequel le premier processeur est configuré d'avantage pour:
diffuser, au moyen du répéteur lors de la réception d'une trame terminale de liaison vocale transmise par le terminal, la trame terminale de liaison vocale dans une période de temps prédéterminée dans le cas où le répéteur est au repos, et transmettre les informations d'état d'emplacement au moyen du répéteur lorsque la période de temps prédéterminée a expirée.

18. Un terminal comprenant:
un récepteur (1201) configuré pour recevoir un identifiant d'un répéteur libre et des informations d'état d'un premier répéteur transmises par le premier répéteur, où le répéteur libre est un répéteur désigné à l'avance parmi des répéteurs d'un type préréglé, chacun des répéteurs préréglés a au moins canal de créneau temporel au repos, et les informations d'état du premier répéteur indiquent des situations d'occupation des canaux de créneau temporel du premier répéteur;
un second processeur (1202), configuré pour effectuer une communication au moyen du premier répéteur, dans le cas où il est analysé par le terminal, à partir des informations d'état du premier répéteur, que le premier répéteur a un canal de créneau temporel au repos et le premier répéteur est un répéteur préréglé principal; et accéder au répéteur libre pour effectuer une communication, dans le cas où il est analysé par le terminal, à partir des informations d'état du premier répéteur, que tous les canaux à créneau temporel du premier répéteur sont occupés, et le terminal ne participe pas à la communication de données actuelle du premier répéteur; et
une seconde mémoire (1203) configurée pour stocker des logiciels dans le second processeur et les données générées pendant que les programmes tournent.

19. Le terminal selon la revendication 18, où le second processeur étant configuré pour effectuer une communication au moyen du premier répéteur, dans le cas il est analysé par le terminal, à partir des informations d'état du premier répéteur, que le premier répéteur a un canal de créneau temporel au repos, et le premier répéteur est le répéteur préréglé principal comprenant:
le second processeur étant configuré pour connecter au premier répéteur afin d'effectuer une communication, dans le cas où il est analysé par le terminal, à partir des informations d'état du premier répéteur, que le premier répéteur a un canal de créneau temporel au repos, le premier répéteur est le répéteur préréglé principal, et s'il n'existe pas d'appel vers le terminal au niveau d'autres répéteurs.

20. Le terminal selon la revendication 18 ou 19, où le second processeur est configuré d'avantage pour:
analyser un état actuel du répéteur principal pour le terminal et l'identifiant du répéteur libre pendant la réception des informations d'état de tous les répéteurs, retourner au répéteur principal pour le terminal dans le cas où le terminal n'effectue pas de communication de données et le répéteur principal pour le terminal a un canal de créneau temporel au repos, et accéder au répéteur libre pour effectue une communication de la cas où le terminal n'effectue pas de communication de données et le répéteur principal pour le terminal n'a pas de canal de créneau temporel au repos.

21. Le terminal selon la revendication 20, dans lequel le second processeur est configuré d'avantage pour:
détecter si le répéteur principal pour le terminal a un canal de créneau temporel au repos, lorsque le terminal initie un appel nouveau pendant la réception d'un appel ou la suspension d'un appel ; arrêter la réception de l'appel et commuter vers le répéteur principal pour le terminal afin d'initie un appel nouveau, dans le cas où le répéteur principal pour le terminal a un canal de créneau temporel au repos, et arrêter la réception de l'appel et commuter vers le répéteur libre afin d'initier un appel nouveau, dans le cas où le répéteur principal pour le terminal n'a pas de canal de créneau temporel au repos.

22. Le terminal selon la revendication 21, dans lequel le second processeur est configuré d'avantage pour: commuter vers le répéteur principal pour le terminal avant de détecter si le répéteur principal pour le terminal a un canal de créneau temporel au repos, dans le cas où un répéteur sur lequel le terminal reçoit l'appel ou maintient l'appel n'est ni le répéteur principal pour le terminal ni le répéteur libre actuel.

23. Le terminal selon la revendication 20 ou la revendication 21, dans lequel le second processeur est configuré d'avantage pour: utiliser le canal de créneau temporel, sur lequel l'appel est maintenu, pour rappeler, dans le cas où le terminal initie un rappel pendant la suppression d'un appel.

24. Un système d'établissement de communication, comprenant le répéteur selon l'une quelconque des revendications 12 à 17 et le terminal selon l'une quelconque des revendications 18 à 23.
